# FASCICULE DE BREVET EUROPEEN

(11) **EP 3 675 425 B1**
(45) Date de publication et mention de la délivrance du brevet: **02.03.2022**
(21) Numéro de dépôt: 19219415.7
(22) Date de dépôt: 23.12.2019
(51) Int. Cl.: H04L 29/06, H04L 29/08, H04L 12/24

(54) **MODULE ELEMENTAIRE D'UN SYSTEME DE DISTRIBUTION D'UN CONTENU AUDIOVISUEL**
BASISMODUL EINES SYSTEM ZUR VERTEILUNG VON AUDIOVISUELLEM INHALT
BASIC MODULE OF A SYSTEM FOR THE DISTRIBUTION OF AUDIOVISUAL CONTENT

(30) Priorité: 28.12.2018 FR 1874299
(43) Date de publication de la demande: 01.07.2020
(73) Titulaire: Quortex, 35510 Cesson Sevigne (FR)
(72) Inventeur: TROLEZ, Thierry, 35510 CESSON SEVIGNE (FR); BAILLAVOINE, Marc, 35510 CESSON SEVIGNE (FR); VILLERET, Julien, 35510 CESSON SEVIGNE (FR); VIERON, Jérôme, 35510 CESSON SEVIGNE (FR)
(74) Mandataire: Cabinet Le Guen Maillet

(56) Documents cités:
- EP-A1- 3 086 510
- US-A1- 2016 380 883

## Description

### DOMAINE TECHNIQUE

La présente invention concerne un module élémentaire destiné à être utilisé dans au moins une chaîne de traitement d'un système permettant de distribuer des contenus audiovisuels, un système comprenant au moins un module élémentaire et un procédé exécuté par un module élémentaire.

### ETAT DE LA TECHNIQUE ANTERIEURE

Le monde de la distribution de la télévision est en pleine mutation. Alors que pendant longtemps les utilisateurs se contentaient d'une diffusion en direct des programmes audiovisuels sur leur poste de télévision, les modes de consommation des programmes audiovisuels ont fondamentalement changé. Ainsi, un utilisateur veut maintenant pouvoir regarder n'importe où et n'importe quand un programme audiovisuel qu'il a choisi. Ces nouveaux modes de consommation ont été rendus possibles par une apparition de nouveaux terminaux toujours plus puissants et nomades et par une forte amélioration des infrastructures réseau.

En parallèle de cette évolution, un nouveau service de diffusion audiovisuel, appelé OTT (service par contournement, « Over-The-Top service» en terminologie anglo-saxonne) est apparu. Un service OTT est un service de distribution de contenus audiovisuels sur réseau dans lequel l'opérateur dudit réseau (i.e. une compagnie de câble, de téléphone ou de satellite) n'assure qu'un rôle de transporteur desdits contenus. Dans un service OTT, l'opérateur du réseau n'a aucun contrôle sur les contenus, c'est-à-dire qu'il n'est ni responsable, ni en mesure de contrôler l'affichage desdits contenus, le respect des droits d'auteurs, et/ou la redistribution desdits contenus. Les services OTT sont opérés sur des réseaux dits non gérés (« managed » en terminologie anglo-saxonne), c'est à dire à bande passante et qualité de service (« quality of service (QoS) » non garanties.

Afin d'adresser ces nouveaux services, divers protocoles ont été développés : Apple HLS (HTTP (« Hypertext Transfer Protocol » en terminologie anglo-saxonne) Live Streaming), Microsoft Smooth Streaming (MSS), Adobe HTTP Dynamic Streaming (HDS), MPEG Dynamic Adaptive Streaming over HTTP (MPEG-DASH). Tous ces protocoles sont basés sur un concept de transmission adaptative basée HTTP (« HTTP Adaptive Streaming (HAS) » en terminologie anglo-saxonne). Le concept de HAS repose sur le fonctionnement suivant :
- Chaque contenu est encodé sous forme d'un flux binaire (« bitstream » en terminologie anglo-saxonne) selon une pluralité de profils, en utilisant différents codecs, différentes résolutions, différents débits. Cette pluralité de profils permet d'adresser des terminaux (ou des applications fonctionnant sur des terminaux) ayant des capacités différentes (codecs supportés, résolution d'écran, puissance de décodage) et d'adapter les contenue aux variations de bande passante sur le réseau.
- Chaque flux binaire est ensuite découpé en segments, appelés chunk en terminologie anglo-saxonne, de quelques secondes selon un format dépendant du protocole à supporter. Pour chaque contenu, un fichier, appelé manifeste, indiquant les caractéristiques de chaque profil et les segments correspondants, est créé. Lorsque plusieurs protocoles doivent être supportés, une version de chaque segment est créée pour chaque protocole.
- Les manifestes et les segments correspondants sont stockés sur des serveurs formant des réseaux de diffusion de contenu (« Content Delivery Network (CDN) » en terminologie anglo-saxonne), appelés simplement CDN par la suite. Les CDN fournissent des capacités de cache dans le réseau ce qui permet d'améliorer la QoS notamment en termes de temps d'accès et de latence.
- Un terminal souhaitant jouer un contenu envoie des requêtes à un CDN. Chaque requête demande un segment et précise le profil du segment demandé. C'est donc le terminal qui fixe le profil demandé.

Un contenu peut donc être stocké dans un nombre de versions important en fonction du nombre de profils et de protocoles devant être supportés. Un système de type HAS est donc très consommateur en termes de volume de données à stocker.

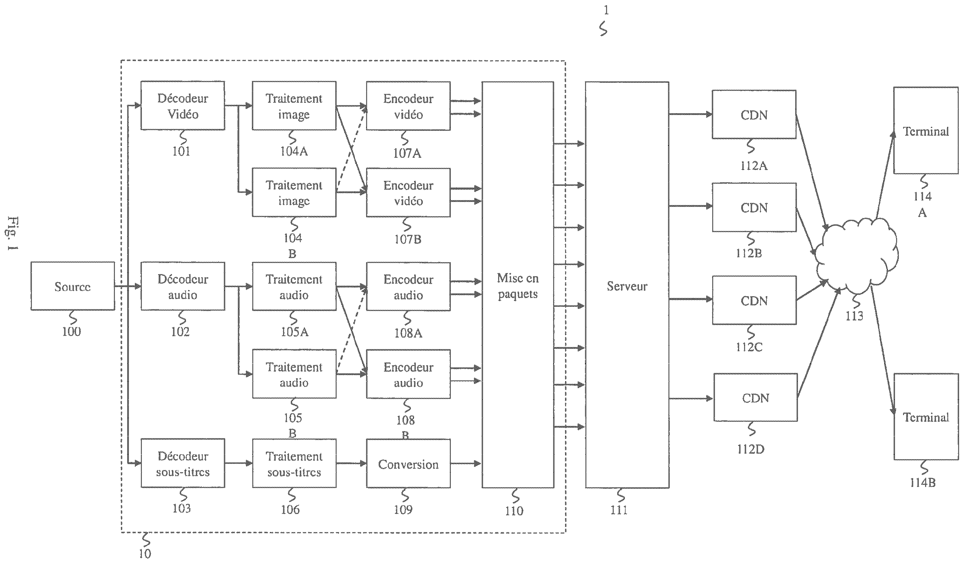

La Fig. 1 représente schématiquement un exemple d'une chaîne de diffusion 1 de programmes audiovisuels.

La chaîne de diffusion 1 comprend une source 100, un bloc appelé tête de réseau OTT 10, un serveur, dit serveur d'origine, 111, une pluralité de CDN 112A, 112B, 112C et 112D reliés à des terminaux 114A, 114B par l'intermédiaire d'un réseau Internet 113.

La source 100 fournit un contenu d'origine à la tête de réseau OTT 10. Dans l'exemple de la Fig. 1 ce contenu est encodé sous forme d'un flux binaire comprenant un sous-flux vidéo, au moins un sous-flux audio et au moins un sous-flux de sous-titres.

La tête de réseau OTT 10 est en charge de la préparation du contenu dans des versions conformes à des besoins de terminaux qui pourraient demander ce contenu. La tête de réseau OTT 10 comprend une pluralité de modules, chaque module pouvant être un module physique (« hardware » en terminologie anglo-saxonne) ou logiciel (« software » en terminologie anglo-saxonne). Dans la tête de réseau OTT 10, le flux binaire est reçu par un décodeur vidéo 101 (respectivement un décodeur audio 102, un décodeur de sous-titres 103) qui génère un flux vidéo décodé (respectivement au moins un flux audio décodé, au moins un flux de sous-titres décodé).

Le flux vidéo décodé est fourni à deux modules de traitement d'images 104A et 104B qui génèrent des flux vidéo traités. Le module de traitement d'images 104A est par exemple un module de filtrage réducteur de bruit. Le module de traitement d'images 104B est par exemple un module de rehaussement de contours.

Chaque flux vidéo traité est fourni à deux encodeurs vidéo 107A et 107B. L'encodeur vidéo 107A est par exemple un encodeur conforme au standard AVC (H264/AVC (ISO/IEC 14496-10 - MPEG-4 Part 10, codage vidéo avancé (« Advanced Video Coding » en terminologie anglo-saxonne) / ITU-T H.264). L'encodeur 107B est par exemple un encodeur conforme au standard HEVC (ISO/IEC 23008-2 - MPEG-H Part 2, codage vidéo haute efficacité (High Efficiency Video Coding en terminologie anglo-saxonne) / ITU-T H.265).

Chaque flux audio décodé est fourni à deux modules de traitement audio 105A et 105B qui génèrent des flux audio traités. Le module de traitement audio 105A est par exemple un module de filtrage réducteur de bruit. Le module de traitement d'images 105B est par exemple un module de rehaussement de voix.

Chaque flux audio traité est fourni à deux encodeurs audio 108A et 108B. L'encodeur audio 108A est par exemple un encodeur conforme au standard AAC (Advanced audio coding, ISO/CEI 13818-7). L'encodeur 107B est par exemple un encodeur conforme au standard MP3 (MPEG-1/2 Audio Layer 3).

Chaque flux de sous-titre décodé est fourni à un module de traitement de sous-titres 106 qui génèrent des flux de sous-titres traités. Le module de traitement de sous-titres 106 est par exemple un module de filtrage remplaçant certains mots par d'autres en fonction d'usages linguistiques régionaux.

Chaque flux de sous-titres traité est fourni à un module de conversion de format de sous-titre.

Chaque flux vidéo issu des encodeurs vidéo 107A et 107B, chaque flux audio issu des encodeurs audio 108A et 108B et chaque flux de sous-titres issu du module de conversion 109 sont transmis à un module de mise en paquets (« packetizer » en terminologie anglo-saxonne) 110. Le module de mise en paquets 110 forme des segments conformes au(x) protocole(s) à supporter. Chaque segment est ensuite transmis à un serveur d'origine 111 qui se charge de transmettre ces segments aux CDN 112A, 112B, 112C et 112D. Chaque terminal 114A (ou 114B) désirant jouer le contenu, demande le contenu à un CDN segment par segment, en changeant de profil si nécessaire d'un segment à un autre.

Dans l'exemple de la Fig. 1, à partir d'un contenu, la tête de réseau OTT 10 a généré, en supposant que deux protocoles de type HAS doivent être supportés, une trentaine de versions différentes du contenu. Les segments correspondant à chaque version sont stockés sur chaque CDN.

Un concept concurrent du concept de HAS, dit JIT (Juste à temps, « just in time » en terminologie anglo-saxonne), permet de réduire le nombre de versions à stocker. Une application du concept JIT à la tête de réseau OTT 10 consisterait à ne pas utiliser systématiquement tous les modules dudit bloc. Par exemple, la tête de réseau OTT 10 pourrait s'arrêter aux décodages, c'est-à-dire au décodage vidéo par le décodeur vidéo 101, au décodage audio par le décodeur audio 102 et au décodage de sous-titres par le décodeur de sous-titres 103. Ensuite, sur requête, en fonction des besoins du terminal ayant émis la requête, la tête de réseau OTT 10 active certains modules.

Le concept JIT peut concerner différents étages d'une chaîne de distribution audiovisuelle. Par exemple, le concept JIT peut être appliqué à un étage de traitement (traitement d'images, traitement audio, traitement de sous-titres) et/ou à un étage d'encodage (vidéo ou audio) et/ou à un étage de mise en paquets. Ainsi, par exemple, un étage de mise en paquets peut ne former que des segments conformes à un seul protocole. Une autre application du concept JIT consiste à générer une seule version d'un contenu (un seul traitement vidéo ou audio, un seul encodage vidéo, un seul encodage audio, un seul protocole) appelée version pivot, puis de générer d'autres versions sur requête à partir de la version pivot, par exemple par transcodage.

Une limitation importante des concepts HAS et JIT est qu'ils impliquent des systèmes de diffusion de données audiovisuelles, dits systèmes de type HAS ou systèmes de type JIT, monolithiques et statiques. Ainsi, ces systèmes ont été dimensionnés une fois pour toutes pour traiter un nombre prédéfini de programmes audiovisuels maximum en parallèle. Ces systèmes ne peuvent aller au-delà de ce nombre prédéfini. Par ailleurs, les relations entre les différents modules de traitement de ces systèmes sont figés. Chaque module est ainsi connecté de manière statique avec le module qui lui donne des données et le module à qui il donne des données. Ainsi, quel que soit le contenu et quel que soit le moment, pour générer une version d'un contenu selon un profil donné, les mêmes modules sont systématiquement instanciés et la même chaîne de traitement (« workflow » en terminologie anglo-saxonne) prédéfinie est systématiquement appliquée.

L'aspect monolithique et statique implique que les chaînes de traitement sont rigides et donc peu évolutives. Ainsi, il est très difficile d'intégrer de nouvelles fonctionnalités ou de remplacer des fonctionnalités dans une chaîne de traitement existante. Au mieux une intervention sur la tête de réseau OTT pour la reconfigurer et au pire un remplacement de la tête de réseau OTT sont nécessaires.

Les architectures de type micro-services permettent en théorie d'assouplir les chaînes de traitement. Une architecture de type micro-services est une architecture logicielle dans laquelle une application ou un traitement complexe est décomposée en plusieurs processus indépendants et faiblement couplés appelés micro-services. Chaque micro-service est le plus souvent spécialisé dans une seule tâche. Les micro-services communiquent entre eux en utilisant des API (Interface de programmation d'application, « Application Programming Interface » en terminologie anglo-saxonne) telles que les API REST (transfert d'état représentationnel, « Representational state transfer » en terminologie anglo-saxonne). Un avantage déclaré d'une architecture de type micro-services est qu'en cas de besoin d'une augmentation de ressources pour réaliser un traitement, seul(s) le (ou les) micro-service(s) impliqués dans ce traitement doivent être mis à l'échelle. Toutefois, ces architectures sont encore difficiles à mettre en œuvre. De plus, elles sont implémentées dans des systèmes qui sont eux-mêmes pré-dimensionnés. Par conséquent, bien qu'en théorie une mise à l'échelle soit possible en cas de besoin, en réalité, il n'est pas possible d'aller au-delà des capacités du système les implémentant. Le document US 2016/0380883 décrit un procédé pour déterminer un réseau de distribution de contenu qui soit personnalisé. Le réseau de transport est notamment personnalisé en fonction d'une demande de contenu contenu et d'informations associées.

Il est souhaitable de pallier ces inconvénients de l'état de la technique. Il est notamment souhaitable de proposer une solution permettant d'aboutir à des systèmes de diffusion de données audiovisuelles non statiques, non monolithiques, et pouvant facilement être mis à l'échelle (« scalable » en terminologie anglo-saxonne) en cas de besoin. Par ailleurs, cette solution devrait permettre d'obtenir un système très agile en termes de modification ou d'ajout de nouvelles fonctionnalités.

### EXPOSE DE L'INVENTION

Un objet de la présente invention est de proposer un module élémentaire destiné à être utilisé dans au moins une chaîne de traitement d'un système permettant de distribuer des contenus audiovisuels stockés ou produits en direct par des sources vers des terminaux d'affichage, chaque contenu étant reçu par un terminal sous forme d'une succession de fichiers consécutifs, appelés segments, chaque segment étant distribué à un terminal suite à une transmission d'une requête par ledit terminal et étant obtenu par une application d'une chaîne de traitement à une portion d'un contenu, le module élémentaire exécutant un traitement d'un type prédéfini de la chaîne de traitement. Le module élémentaire comprend: une pluralité variable d'unités de traitement disponibles pour exécuter le traitement du type prédéfini, le module élémentaire obtenant régulièrement une information représentative de chaque unité de traitement ajoutée ou supprimée de la pluralité, chaque unité de traitement ne conservant aucune information concernant un traitement une fois le traitement effectué; un module, dit module central, comprenant un module de communication : apte à recevoir des demandes de premières données, chaque demande comprenant une information représentative d'une chaîne de traitement à appliquer à une portion d'un contenu correspondant à un segment demandé dans une requête par un terminal pour obtenir lesdites premières données et une information représentative de paramètres de configuration à appliquer à au moins une unité de traitement dudit module élémentaire pour générer les premières données, chaque unité de traitement prenant en compte l'information représentative des paramètres de configuration comprise dans une demande de premières données pour effectuer un traitement correspondant à ladite demande de premières données ; apte à transmettre une demande de secondes données à une source ou à une unité précédant le module élémentaire dans la chaîne de traitement déterminée à partir de l'information représentative de la chaîne de traitement, lesdites secondes données correspondant à ladite portion traitée ou pas par une ou plusieurs unités précédant le module élémentaire dans la chaîne de traitement ; et, apte à transmettre des premières données lorsqu'elles sont disponibles à une unité ayant émis une demande pour lesdites premières données ; un module d'allocation, apte à gérer des allocations et désallocations d'unités de traitement de la pluralité en fonction de demandes de premières données reçues ; et, un module de gestion de charge apte à choisir pour chaque demande reçue au moins une unité de traitement parmi des unités de traitement allouées pour traiter des secondes données afin d'obtenir des premières données demandées et lançant le traitement du type prédéfini par chaque unité de traitement choisie.

L'utilisation d'un module élémentaire selon l'invention permet d'éviter d'avoir une unité de gestion dans le système de distribution indiquant quelle unité de traitement doit exécuter un traitement de la chaîne de traitement. En recevant la demande de premières données, le module élémentaire sait qu'il doit exécuter un traitement du type de traitement prédéfini, mais la demande ne lui impose pas quelle ou quelles unités de traitement doit mettre en œuvre ce traitement. En effet, le module élémentaire est apte à déterminer lui-même quelle unité de traitement dont il a connaissance devra mettre en œuvre le traitement. Cet aspect permet d'obtenir un système de distribution de données audiovisuelles très agile, apte à utiliser un nombre d'unités de traitement variable dans le temps en fonction de ses besoins, ces unités de traitement appartenant à un ensemble d'unités de traitement disponible qu'il est possible de faire évoluer dans le temps. Le fait de laisser le module élémentaire définir pour chaque segment les unités de traitement à utiliser et de recevoir une demande de premières données décrivant la chaîne de traitement permet d'utiliser des unités de traitement, dites sans état, ne conservant aucune information concernant un traitement une fois le traitement effectué. Les unités de traitement sans états peuvent passer d'un traitement à un autre très rapidement sans que les traitements concernent nécessairement une même chaîne de traitement, un même contenu ou un même terminal d'affichage. De plus, l'allocation dynamique des unités de traitement mise en œuvre par le module d'allocation permet de ne pas monopoliser des unités de traitement inutilement et ainsi de les rendre disponibles par exemple pour d'autres chaînes de traitement mises en œuvre par d'autres modules élémentaires. Le module d'allocation n'alloue que des unités de traitement dont il a besoin pour être certain d'exécuter les traitements qui lui sont demandés.

Selon un mode de réalisation, chaque unité de traitement interroge une base de données comprise dans le module central pour obtenir des paramètres de configuration correspondant à l'information représentative de paramètres de configuration avant d'effectuer un traitement correspondant à une demande de premières données.

Selon un mode de réalisation, le module central comprend une mémoire cache et le module de communication est configuré pour transmettre une demande de secondes données lorsque les premières données demandées sont absentes de la mémoire cache.

Ainsi, on évite d'activer systématiquement toute une chaîne de traitement si des premières données sont disponibles dans la mémoire cache d'un module élémentaire.

Selon un mode de réalisation, la base de données comprend des paramètres de configuration fixés indépendamment d'une demande de premières données.

Ainsi, il est possible d'enrichir un paramétrage de chaque unité de traitement par des paramètres qui ne seraient pas représentés dans un profil sélectionné.

Selon un mode de réalisation, la base de données et chaque module du module élémentaire sont colocalisés sur un même équipement ou totalement ou partiellement dispersés sur des équipements séparés reliés par un réseau de communication.

Selon un mode de réalisation, le module élémentaire comprend un module d'extraction apte à extraire l'information représentative des paramètres de configuration de chaque demande de premières données reçues.

Selon un mode de réalisation, le module élémentaire comprend des moyens d'exécution d'un procédé de gestion de la mémoire cache gérant des entrées et sorties de données de la mémoire cache.

Selon un mode de réalisation, le module élémentaire comprend un module de régulation fournissant des règles de gestion au module de gestion de cache, au module d'allocation et au module de gestion de charge, le module de régulation stockant des règles de gestion prédéfinies ou recevant des règles de gestion d'une entité extérieure.

Selon un deuxième aspect de l'invention, l'invention concerne un procédé de traitement exécuté par un module élémentaire exécutant un type de traitement prédéfini dans au moins une chaîne de traitement d'un système de distribution de contenus audiovisuels stockés ou produits en direct par des sources vers des terminaux d'affichage, chaque distribution de contenu se faisant sous forme de fichiers, appelés segments, chaque segment distribué à un terminal ayant fait l'objet d'une requête transmise par ledit terminal et résultant d'une application d'une chaîne de traitement à une portion de contenu demandée par la requête. Le procédé comprend : recevoir au moins une demande de premières données, chaque demande comprenant une information représentative d'une chaîne de traitement à appliquer à une portion d'un contenu correspondant à un segment demandé dans une requête par un terminal pour obtenir lesdites premières données et une information représentative de paramètres de configuration à appliquer à au moins une unité de traitement pour générer les premières données ; récupérer l'information représentative des paramètres de configuration contenus dans ladite demande et transmettre une demande de secondes données à une source ou à une unité précédant le module élémentaire dans la chaîne de traitement déterminée à partir de l'information représentative de la chaîne de traitement, lesdites secondes données correspondant à ladite portion traitée ou pas par une ou plusieurs unités précédant le module élémentaire dans la chaîne de traitement ; déterminer si une ou plusieurs unités de traitement du module élémentaire doivent être allouées ou désallouées et allouer et/ou désallouer au moins une unité de traitement lorsque nécessaire en fonction de la ou des demandes reçues, chaque unité de traitement appartenant à une pluralité d'unités de traitement disponibles pour exécuter le traitement du type de traitement prédéfini, le module élémentaire obtenant régulièrement une information représentative de chaque unité de traitement ajoutée ou supprimée de ladite pluralité ; choisir pour chaque demande au moins un unité de traitement parmi les unités de traitement allouées et activer chaque unité de traitement choisie afin qu'elle applique le type de traitement prédéfini sur les secondes données à réception des secondes données, chaque unité de traitement prenant en compte l'information représentative des paramètres de configuration correspondant au traitement qu'elle doit exécuter ; et, pour chaque demande, transmettre les premières données lorsqu'elles sont disponibles à une unité ayant émis la demande pour lesdites premières données ; chaque unité de traitement ne conservant aucune information concernant un traitement une fois le traitement effectué.

Selon un mode de réalisation, chaque unité de traitement devant exécuter un traitement demandé dans une demande de premières données interroge une base de données en utilisant l'information représentative de paramètres de configuration contenus dans ladite demande afin d'obtenir des paramètres de configuration correspondant à ladite information à appliquer pour ledit traitement.

Selon un mode de réalisation, le procédé comprend, pour chaque demande, préalablement à la transmission d'une demande pour des deuxièmes données, vérifier une présence des premières données dans une mémoire cache du module élémentaire ; et, transmettre la deuxième demande lorsque les premières données sont absentes de la mémoire cache.

Selon un troisième aspect, l'invention concerne un système de distribution de contenus audiovisuels stockés ou produits en direct par des sources vers des terminaux d'affichage, chaque contenu étant reçu par un terminal sous forme d'une succession de fichiers consécutifs, appelés segments, chaque segment étant distribué à un terminal suite à une transmission d'une requête par ledit terminal et étant obtenu par une application d'une chaîne de traitement à une portion d'un contenu, au moins une chaîne de traitement mise en oeuvre par le système de distribution comprend au moins un module élémentaire selon le premier aspect apte à mettre en œuvre un traitement d'un type de traitement prédéfini.

Selon un quatrième aspect, l'invention concerne un produit programme d'ordinateur, comportant des instructions pour mettre en œuvre, par un équipement, le procédé selon le deuxième aspect par un ou plusieurs processeurs de l'équipement.

Selon un cinquième aspect, l'invention concerne des moyens de stockage, stockant un programme d'ordinateur comportant des instructions pour mettre en œuvre, par un équipement, le procédé selon le deuxième aspect lorsque ledit programme est exécuté par un ou plusieurs processeurs dudit équipement.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] décrit un système de diffusion de données audiovisuelles classiques ;
[Fig. 2A] décrit un système de diffusion de données audiovisuelles à un premier instant pendant la diffusion ;
[Fig. 2B] décrit un système de diffusion de données audiovisuelles à un deuxième instant pendant la diffusion ;
[Fig. 2C] décrit un système de diffusion de données audiovisuelles à un troisième instant pendant la diffusion ;
[Fig. 3] illustre schématiquement un module élémentaire apte à exécuter un traitement d'un type prédéfini d'une chaîne de traitement ;
[Fig. 4] illustre un exemple d'architecture matérielle du module élémentaire utilisé dans la cadre de l'invention ;
[Fig. 5] illustre schématiquement une procédure de lancement d'une chaîne de traitement ; et,
[Fig. 6] illustre schématiquement un procédé exécuté par un module élémentaire lors d'une réception d'une ou plusieurs demandes de premières données.

### EXPOSE DETAILLE DE MODES DE REALISATION

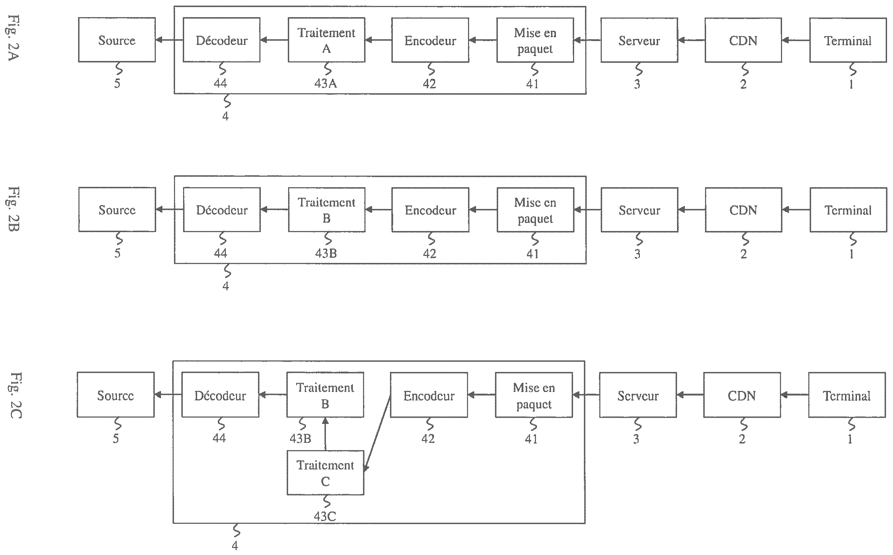

Les Figs. 2A, 2B, et 2C décrivent une évolution d'un système de distribution de données audiovisuelles en cours de fonctionnement en cas d'utilisation de l'invention.

A un premier instant, correspondant à la Fig. 2A, ce système de distribution comprend un terminal d'affichage 1, au moins un CDN 2, un serveur d'origine 3, appelé simplement serveur par la suite, une chaîne de traitement 4 et une source 5. La source 5 comprend au moins un contenu audiovisuel, appelé simplement contenu par la suite, pouvant être demandé par le terminal 1 suivant un profil particulier. La chaîne de traitement 4 comprend un ensemble de modules de traitement comprenant un module de décodage 44 apte à exécuter un décodage audio et vidéo, un module de traitement d'images 43A apte à appliquer un traitement d'image A, un module d'encodage 42 apte à effectuer un encodage audio et vidéo et un module de mise en paquets 41 apte à générer des segments conformes à un protocole prédéterminé. Le traitement d'image A est par exemple un filtrage réducteur de bruit. Chaque module de traitement de la chaîne de traitement 4 peut être un module logiciel (« software » en terminologie anglo-saxonne) exécuté par une ou plusieurs unités de traitement programmables ou matériel (« hardware » en terminologie anglo-saxonne) par une unité de traitement dédiée. Les modules de traitement de la chaîne de traitement 4 peuvent être colocalisés géographiquement et reliés par exemple par un bus de communication ou dispersés et reliés entre eux par un réseau de communication.

Dans l'exemple de la Fig. 2A, le système de distribution est en cours de distribution d'un contenu. Le terminal 1 a fixé un profil et le système de distribution fournit des segments compatibles avec ce profil. Comme nous l'avons vu plus haut, pour chaque segment du contenu, le terminal 1 envoie une requête afin d'obtenir ledit segment contenant une information représentative du profil souhaité.

Comme nous le décrivons par la suite, la chaîne de traitement 4 est définie de manière dynamique pour chaque segment par le terminal 1 ou par un dispositif intermédiaire qui peut être le CDN 2 ou le serveur 3. Pour chaque segment, chaque module de traitement a été choisi dans un ensemble de modules de traitement candidats aptes à appliquer exactement le même traitement. Ainsi, bien que d'un segment à un autre, la chaîne de traitement 4 peut appliquer des traitements strictement identiques, chaque traitement peut être exécuté par des modules de traitement différents. Pour un traitement d'un type donné, un changement de module de traitement peut être motivé par une non disponibilité temporaire d'un module de traitement, par exemple, lorsque ce module de traitement est déjà utilisé pour générer un autre segment, par un dysfonctionnement dudit module de traitement, par une surcharge de l'unité de calcul devant implémenter ledit module de traitement, par un choix d'un opérateur qui souhaite privilégier certaines unités de traitement plutôt que d'autres, etc.

A un deuxième instant représenté en Fig. 2B, toujours en cours de distribution du contenu, un opérateur s'est par exemple rendu compte qu'une qualité du contenu affiché sur le terminal 1 n'était pas suffisante. Dans ce contexte, un traitement d'images B serait plus approprié que le traitement d'images A. Le traitement d'images B est par exemple un filtrage permettant de rehausser des contours. Dans ce cas, l'opérateur envoie par exemple une commande au terminal 1 afin que le terminal 1 génère une requête permettant de modifier la chaîne de traitement 4. Suite à cette commande, le module de traitement d'images 43A est remplacé par un module de traitement d'images 43B mettant en oeuvre le traitement d'images B.

A un troisième instant, représenté en Fig. 2C, toujours en cours de distribution du contenu, l'opérateur s'est par exemple rendu compte que le contenu est diffusé frauduleusement sur des terminaux non autorisés. Dans ce contexte, afin de faire cesser cette fraude, un traitement C de type tatouage numérique est approprié. Dans ce cas, l'opérateur envoie par exemple une commande au terminal 1 afin que le terminal 1 génère une requête permettant de modifier la chaîne de traitement 4. Suite à ce paramétrage par l'opérateur, un module de tatouage numérique 43C est ajouté à la chaîne de traitement 4 entre le module de traitement 43B et le module d'encodage 42.

Les exemples décrits dans les Figs. 2A, 2B et 2C montrent que l'invention permet une grande dynamicité et agilité dans la définition de la chaîne de traitement 4. Ainsi, une chaîne de traitement différente peut être définie à chaque segment. On note que la définition de la chaîne de traitement n'est pas seulement dynamique dans le choix du module de traitement candidat devant implémenter tel ou tel traitement, mais aussi en termes de choix des traitements à appliquer par cette chaîne de traitement.

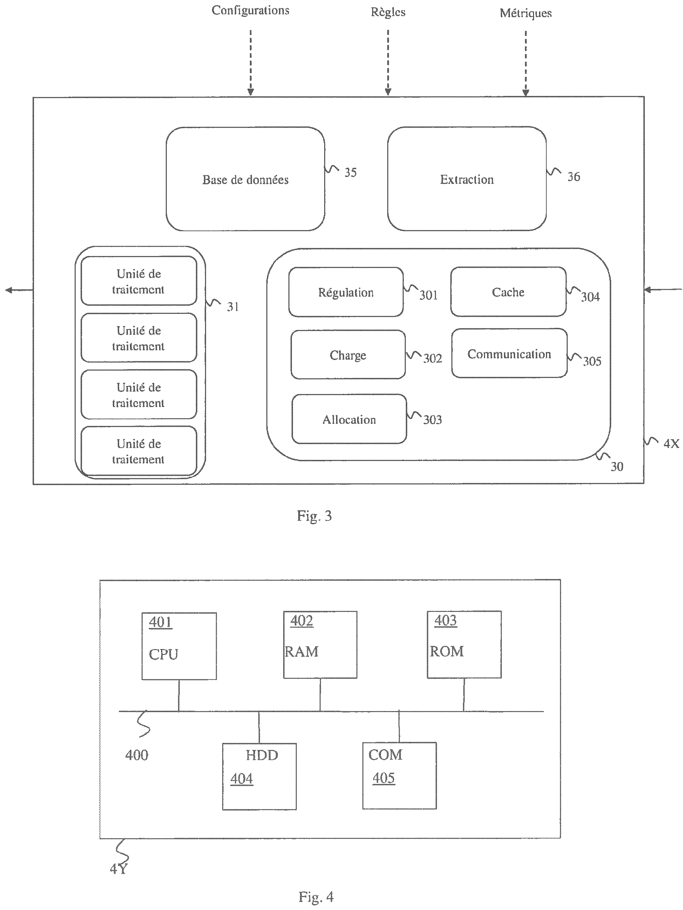

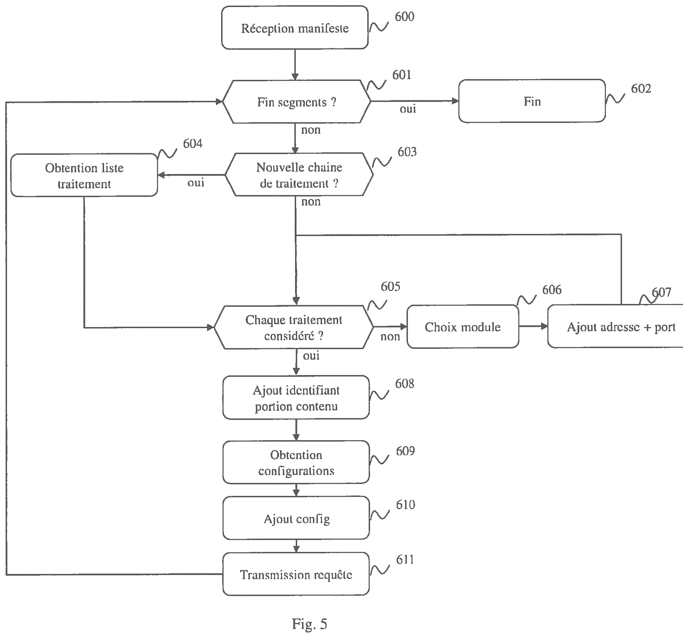

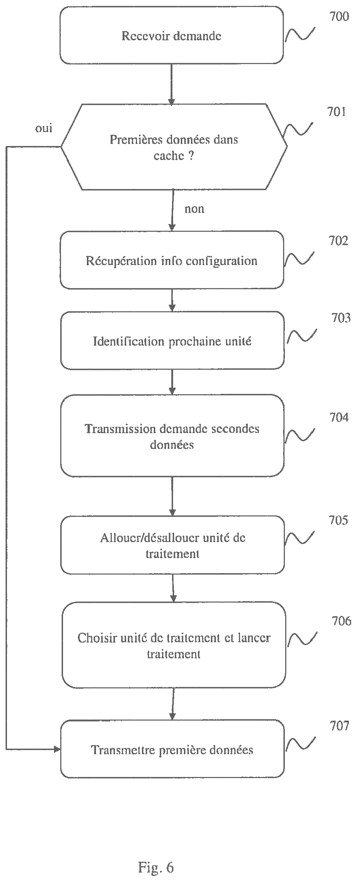

Dans un mode de réalisation, chaque module de traitement de la chaîne de traitement 4 est mis en œuvre par un module élémentaire que nous décrivons par la suite en relation avec les Figs. 3 et 4. Chaque module élémentaire met à la disposition de la chaîne de traitement, une ou plusieurs unités de traitement pour mettre en œuvre un module de traitement de la chaîne de traitement. Un rôle d'un module élémentaire en charge d'un traitement dans une chaîne de traitement est de choisir quelle ou quelles unités de traitement parmi un ensemble d'unités de traitement dont il a connaissance doit exécuter ledit traitement. Pour une chaîne de traitement donnée, aucun traitement mis en œuvre par un module élémentaire n'est exécuté par une unité de traitement définie au préalable de manière centralisée. Comme nous le montrons dans les Figs. 5 et 6 suivantes, chaque requête du terminal 1 pour un segment déclenche pour chaque module élémentaire impliqué dans un traitement de la chaîne de traitement devant produire ce segment, une sélection d'une ou plusieurs unités de traitement. D'un segment à un autre, le ou les unités de traitement sélectionnées peuvent être différentes.

Par ailleurs, un module élémentaire peut contribuer à plusieurs chaînes de traitement en parallèle, chaque chaîne de traitement permettant de distribuer un contenu audiovisuel stocké ou produit en direct par une source vers un terminal d'affichage. Un module élémentaire n'est donc pas monopolisé par une chaîne de traitement.

La Fig. 5 illustre schématiquement des étapes d'un procédé permettant d'activer une chaîne de traitement afin qu'un terminal puisse obtenir un segment.

Selon un mode de réalisation, le procédé de la Fig. 5 est exécuté par le terminal 1. Le procédé de la Fig. 5 permet au terminal 1 d'activer une chaîne de traitement afin d'obtenir un segment. Dans un mode de réalisation, le segment demandé est conforme au protocole HLS et chaque transmission de données, chaque requête et chaque demande se font sous forme de transmissions de requêtes conformes au protocole HTTP/HTTPS (HTTP sécurisé « HTTP secured » en terminologie anglo-saxonne).

Préalablement à la mise en œuvre du procédé de la Fig. 5, nous supposons que le terminal 1 a demandé un manifeste au CDN 2 concernant un contenu. Dans une étape 600, le terminal 1 reçoit une requête contenant le manifeste en provenance du CDN 2. Ce manifeste décrit chaque profil pouvant être demandé par le terminal 1.

Dans une étape 601, le terminal 1 détermine s'il doit continuer à jouer le contenu en cours ou pas, i.e. s'il doit demander un nouveau segment, dit segment courant. Cette information a été par exemple fournie par un utilisateur du terminal 1. Si le terminal 1 ne doit pas continuer à jouer le contenu, le procédé prend fin lors d'une étape 602.

Sinon, l'étape 601 est suivie d'une étape 603. Au cours de l'étape 603, le terminal 1 détermine si la chaîne de traitement 4 utilisée pour le segment précédant le segment courant doit être modifiée. En d'autres termes, est-il nécessaire d'ajouter, supprimer ou remplacer un traitement exécuté par la chaîne de traitement 4 pour obtenir le segment courant. Dans un mode de réalisation, lors de chaque changement de profil, le terminal 1 considère que la chaîne de traitement 4 doit être modifiée. Lors de l'étape 603, le terminal 1 sélectionne un profil, dit profil courant, parmi les profils du manifeste en fonction de contraintes de transmission et de traitement obtenues par le terminal 1. Les contraintes de transmission sont par exemple une contrainte de débit mesurée par le terminal 1. Les contraintes de traitement sont par exemple une capacité d'affichage (i.e. une résolution d'écran) du terminal 1, un nombre d'images pouvant être décodées par seconde, etc. Une fois déterminé, le profil courant est comparé au profil demandé pour le segment précédant le segment courant. Si les deux profils sont identiques, le terminal 1 exécute une étape 605. Si les deux profils sont différents ou si le segment courant est le premier segment demandé pour le contenu, le terminal 1 exécute une étape 604.

Lors de l'étape 604, le terminal 1 obtient une liste de traitements représentative de la chaîne de traitement 4 à appliquer à une portion du contenu pour obtenir le segment courant. Dans ce mode de réalisation, cette liste est déduite du profil sélectionné lors de l'étape 603. Le terminal 1 possède par exemple une table de correspondance associant chaque profil pouvant être demandé pour un contenu, à une liste de traitements.

L'étape 604 est suivie de l'étape 605. Lors de l'étape 605, le terminal 1 utilise soit la liste de traitements définie lors de l'étape 604, soit la liste de traitements correspondant à la chaîne de traitement appliquée au segment précédant le segment courant. Dans un mode de réalisation, la liste de traitements utilisée lors de l'étape 605 est une liste ordonnée dans laquelle les traitements à appliquer à la portion du contenu pour obtenir le segment courant apparaissent dans l'ordre inverse dans lequel ces traitements doivent être appliqués. Par exemple, si on reprend l'exemple de la Fig. 2A, la liste de traitement est la suivante :
mise en paquets conformes au protocole HLS;
encodage conforme à la norme AVC;
traitement A ;
décodage conforme à la norme HEVC.

Lors de l'étape 605, le terminal 1 détermine si chaque traitement de la liste de traitements a été considéré. Si non, le terminal 1 parcourt la liste depuis le premier traitement à la recherche du prochain traitement non encore considéré.

Dans une étape 606, le terminal 1 choisit un module élémentaire dans un ensemble de modules aptes à exécuter ledit traitement.

Dans une étape 607, le terminal 1 ajoute un identifiant composé d'une adresse et d'un numéro de port du module élémentaire choisi dans une requête. Chaque identifiant est écrit à la suite de ou des identifiants éventuellement déjà présents dans la requête.

L'étape 607 est suivie de l'étape 605, au cours de laquelle le terminal 1 passe au traitement suivant dans la liste.

Lorsque tous les traitements de la liste ont été considérés, le terminal 1 passe à une étape 608. Lors de l'étape 608, le terminal 1 ajoute dans la requête une information représentative de la portion du contenu souhaitée. Cette information permet aussi d'identifier la source stockant ou produisant en direct ledit contenu.

Dans une étape 609, le terminal 1 obtient pour chaque traitement une information représentative de paramètres de configuration du module élémentaire correspondant audit traitement, l'information représentative des paramètres de configuration ayant été obtenus à partir, notamment, du profil sélectionné lors de l'étape 603.

Dans une étape 610, le terminal 1 ajoute l'information représentative de paramètres de configuration de chaque module dans la requête.

En supposant que la chaîne de traitement à appliquer au segment courant est la chaîne de traitement 23 de la Fig. 2A, la requête comprend la séquence suivante :
http://Adresse1:port1/Adresse2:port2/Adresse3:port3/Adresse4:port4/IDportion?Conf
où Adressel:port1 (respectivement Adresse2:port2, Adresse3:port3, Adresse4:port4) correspond à l'identifiant (l'adresse et le numéro de port) du module 41 (respectivement l'identifiant du module 42, du module 43 et du module 44). IDportion correspond à l'information représentative de la portion du contenu. Conf correspond à l'information représentative de paramètres de configuration de chaque module.

Dans un mode de réalisation, l'information conf prend la forme suivante :
Conf1=NomConf1&Conf2=NomConf2&Conf3=NomConf3&Conf4=NomConf4
où ConfN correspond à un identifiant d'une information représentative de paramètres de configuration d'un module élémentaire N et NomConfN correspond à un nom du fichier textuel, par exemple au format JSON (« JavaScript Object Notation » en terminologie anglo-saxonne) ou XML (« Extensible Markup Language » en terminologie anglo-saxonne) contenant les paramètres de configuration détaillés qu'il faudra appliquer. Dans un mode de réalisation, ces fichiers textuels sont connus de chaque module élémentaire.

Dans un autre mode de réalisation, le champ conf comprend explicitement chaque paramètre de configuration à appliquer à un module élémentaire.

Dans une étape 611, le terminal 1 transmet la requête au premier module élémentaire destinataire afin de lancer l'exécution de la chaîne de traitement et ainsi provoquer la transmission du segment courant au terminal 1.

On remarque que les systèmes de diffusion décrits en relation avec les Figs. 2A, 2B et 2C comprennent un CDN 2 et un serveur 3 situés entre le terminal 1 et la chaîne de traitement 4. Dans ce cas, la requête émise par le terminal 1 traverse le serveur 2 et le CDN 3 sans intervention de ceux-ci qui se contentent de la retransmettre.

On note que le procédé décrit en relation avec la Fig. 6 forme une procédure de lancement de la chaîne de traitement.

La Fig. 3 illustre schématiquement un module élémentaire 4X apte à exécuter un traitement d'un type prédéfini d'une chaîne de traitement.

Le module élémentaire 4X de la Fig. 3 est par exemple un module élémentaire mettant en œuvre l'un des modules de traitement 41 à 44. Si, par exemple, le module élémentaire implémente le module de traitement 41, le type de traitement mis en œuvre par le module élémentaire 4X est donc une mise en paquets conforme au protocole HLS.

Le module élémentaire 4X comprend une pluralité variable d'unités de traitement 31 disponibles pour exécuter le traitement du type prédéfini, le module élémentaire 4X obtenant régulièrement une information représentative de chaque unité de traitement ajoutée ou supprimée de la pluralité. Chaque unité de traitement de la pluralité est dite sans état, c'est-à-dire qu'elle ne conserve aucune information concernant un traitement une fois le traitement effectué. Un avantage d'une unité de traitement sans état est qu'elle peut facilement passer d'un traitement à un autre sans que les traitements successifs concernent un même contenu, une même chaîne de traitement ou un même terminal.

Le module élémentaire 4X comprend de plus, un module central, comprenant un module de communication 305, un module d'allocation 303 et un module de gestion de charge 302 et une base de données 35.

Le module de communication 305 est apte à recevoir des demandes de premières données. Une demande de premières données est par exemple la requête transmise par le terminal 1 lors de l'étape 611 lorsque le module élémentaire 4X met en œuvre le module de traitement 41. Lorsque le module élémentaire met en œuvre le module de traitement 42 (respectivement 43 ou 44), une demande de premières données correspond à la requête transmise par le terminal 1 lors de l'étape 611 modifiée par le module élémentaire mettant en œuvre le module de traitement 41 (respectivement par les modules élémentaires mettant en œuvre les modules de traitement 41 et 42 ou par les modules élémentaires mettant en œuvre les modules de traitement 41, 42 et 43) selon une procédure de modification décrite en relation avec la Fig. 6. Dans le cas où le module élémentaire 4X met en œuvre le module de traitement 41, les premières données correspondent au segment courant puisque le module 41 est le dernier module de la chaîne de traitement. La requête générée par le terminal 1 demande donc le segment courant au module élémentaire 4X. Lorsque le module élémentaire 4X met en œuvre le module de traitement 42 (respectivement 43 ou 44), les premières données sont un résultat des traitements de la portion de contenu correspondant à l'identifiant IDportion par les modules de traitement 43 et 44 (respectivement du traitement de ladite portion de contenu par le module de traitement 44 ou ladite portion de contenu).

Comme nous l'avons vu plus haut, cette demande de premières données comprend une information représentative d'une chaîne de traitement à appliquer à la portion de contenu correspondant à l'identifiant IDportion afin d'obtenir les premières données et une information représentative de paramètres de configuration à appliquer à au moins une unité de traitement dudit module élémentaire pour générer les premières données. Dans le cas où le module élémentaire 4X met en œuvre le module de traitement 41, l'information représentative de la chaîne de traitement (i.e. la séquence Adresse1:port1/Adresse2:port2/Adresse3:port3/Adresse4:port4) décrit toute la chaîne de traitement. Lorsque le module élémentaire met en œuvre le module de traitement 42 (respectivement 43 ou 44), l'information représentative de la chaîne de traitement décrit la chaîne de traitement jusqu'au module de traitement 42 (i.e. Adresse2:port2/Adresse3:port3/Adresse4:port4) (respectivement jusqu'au module 43 (Adresse3:port3/Adresse4:port4) ou 44 (Adresse4:port4)).

Le module de communication 305 est de plus apte à transmettre une demande de secondes données à la source 5 ou à une unité précédant le module élémentaire 4X dans la chaîne de traitement 4 déterminée à partir de l'information représentative de la chaîne de traitement. Lorsque le module élémentaire 4X met en œuvre le module de traitement 41, l'unité précédant le module élémentaire 4X est un module élémentaire mettant en œuvre le module de traitement 42. Les secondes données correspondent à un résultat d'une application des modules de traitement 42, 43 et 44 à la portion de contenu correspondant à l'identifiant IDportion. Lorsque le module élémentaire 4X met en œuvre le module de traitement 42, l'unité précédant le module élémentaire 4X est un module élémentaire mettant en œuvre le module de traitement 43. Les secondes données correspondent au résultat d'une application des modules de traitement 43 et 44 à la portion de contenu correspondant à l'identifiant IDportion. Lorsque le module élémentaire 4X met en œuvre le module de traitement 43, l'unité précédant le module élémentaire 4X est un module élémentaire mettant en œuvre le module de traitement 44. Les secondes données correspondent au résultat d'une application du module de traitement 44 à la portion de contenu correspondant à l'identifiant IDportion. Lorsque le module élémentaire 4X met en œuvre le module de traitement 44, l'unité précédant le module élémentaire 4X est la source 5. Les secondes données correspondent à la portion de contenu correspondant à l'identifiant IDportion.

Le module de communication 305 est en outre apte à transmettre les premières données demandées à l'unité ayant émis la demande pour lesdites premières données. Lorsque le module élémentaire 4X met en œuvre le module de traitement 41, l'unité ayant émis la demande est le terminal 1. Lorsque le module élémentaire 4X met en œuvre le module de traitement 42, l'unité ayant émis la demande est le module élémentaire mettant en œuvre le module de traitement 41. Lorsque le module élémentaire 4X met en œuvre le module de traitement 43, l'unité ayant émis la demande est le module élémentaire mettant en œuvre le module de traitement 42. Lorsque le module élémentaire 4X met en œuvre le module de traitement 44, l'unité ayant émis la demande est le module élémentaire mettant en œuvre le module de traitement 43.

Dans un mode de réalisation, le module de communication 305 est un serveur WEB.

Le module d'allocation 303 gère des allocations et désallocations d'unités de traitement de la pluralité en fonction notamment des demandes de premières données reçues par le module élémentaire 4X.

Le module de gestion de charge 302 est apte à choisir pour chaque demande reçue au moins une unité de traitement parmi les unités de traitement allouées par le module d'allocation 303 et apte à lancer le traitement du type prédéfini par chaque unité de traitement choisi afin d'obtenir les premières données demandées à partir des deuxièmes données.

Dans un mode de réalisation, la base de données 35 est destinée à stocker des fichiers textuels, par exemple au format JSON ou XML contenant chacun des paramètres de configuration détaillés correspondant aux informations représentatives des paramètres de configuration NomConfN contenues dans les demandes de premières données.

Dans un mode de réalisation, la base de données 35 stocke aussi des fichiers textuels qui ne correspondent pas directement aux profils demandés par des terminaux, mais à des profils dits contraints contenant des paramètres de configuration contraints fixés par une entité externe indépendamment d'une demande de premières données. Ces paramètres de configuration contraints sont par exemple des paramètres imposés par un opérateur qui n'apparaissent pas dans un profil. Par exemple, ces paramètres peuvent forcer un encodeur vidéo à fonctionner avec un nombre d'outils de compression restreint.

Dans un mode de réalisation, le module central 30 comprend une mémoire cache 304 utilisée pour conserver temporairement, selon un procédé de gestion de mémoire cache prédéfini mis en œuvre par un module de gestion de cache, des premières données générées par le module élémentaire 4X. Le procédé de gestion de la mémoire cache peut consister simplement à conserver dans la mémoire cache chaque première donnée pendant une durée prédéfinie et d'effacer ces premières données après cette durée prédéfinie. Dans un mode de réalisation, le module de gestion de cache peut calculer des statistiques sur les contenus demandés et ajuster la durée de conservation des premières données en fonction de ces statistiques. Par exemple, le procédé de gestion de la mémoire cache peut consister à augmenter la durée prédéfinie de conservation pour les premières données correspondant à des contenus très demandés et à diminuer la durée de conservation pour les premières données correspondant aux contenus peu demandés. Dans un mode de réalisation, le module de communication 305 met en œuvre le procédé de gestion de la mémoire cache. Dans ce cas, le module élémentaire 4X ne comprend pas de module de gestion de cache.

Dans un mode de réalisation, le module élémentaire 4X comprend un module d'extraction 36 apte à extraire l'information représentative des paramètres de configuration de chaque demande de premières données reçues par le module élémentaire 4X.

Dans un mode de réalisation, le module central 30 comprend un module de régulation 301 fournissant des règles de gestion de cache prises en compte dans la procédure de gestion de cache, des règles d'allocation au module d'allocation 303 et des règles de gestion de charge au module de gestion de charge 302, le module de régulation stockant des règles de gestion prédéfinies ou recevant des règles de gestion d'une entité extérieure. Les règles de gestion de cache fixent par exemple la durée de conservation des premières données dans la mémoire cache 304. Les règles d'allocation fixent par exemple quelles unités de traitement doivent être allouées ou désallouées en priorité en fonction de critères de capacité calculatoire, de consommation d'énergie ou de coût financier d'utilisation de chaque unité de traitement. Les règles de gestion de charge peuvent par exemple fixer quand une unité de traitement est considérée comme surchargée et qu'elle ne doit plus être sollicitée pour de nouveaux traitements.

Dans un mode de réalisation, les modules 30, 301, 302. 303, 305 et 36, la base de données 35, et la mémoire cache 304 sont compris dans un seul équipement 4Y et reliés entre eux par un bus de communication. Les unités de traitement de la pluralité 31 sont comprises dans l'équipement 4Y ou comprises dans d'autres équipements reliés à l'équipement 4Y par un réseau de communication.

La Fig. 4 illustre un exemple d'architecture matérielle d'un équipement 4Y utilisé dans le cadre de l'invention. Dans l'exemple de la Fig. 4, l'équipement 4Y implémente les modules 30, 301, 302, 303, 305 et 36, la base de données 35, et la mémoire cache 304 et comprend certaines unités de traitement de la pluralité 31.

L'équipement 4Y comprend alors, reliés par un bus de communication 400: une pluralité d'unités de traitement 401; une mémoire vive RAM 402; une mémoire morte ROM 403; une unité de stockage ou un lecteur de support de stockage, tel qu'un lecteur de cartes SD 404; un ensemble d'interfaces de communication 405 permettant à l'équipement 4Y de communiquer avec d'autres unités de la chaîne de traitement, i.e. avec d'autres modules élémentaires, avec la source 5, le terminal 1 et avec d'autres équipements. Dans un mode de réalisation, l'unité de stockage 404 stocke la base de données 35 et la mémoire cache 304.

Chaque unité de traitement de la pluralité 401 est capable d'exécuter des instructions chargées dans la RAM 402 à partir de la ROM 403, d'une mémoire externe (non représentée), d'un support de stockage, tel qu'une carte SD, ou d'un réseau de communication. Lorsque l'équipement 4Y est mis sous tension, chaque unité de traitement de la pluralité 401 est capable de lire de la RAM 402 des instructions et de les exécuter. Chaque module du module élémentaire 4X, le traitement du type de traitement prédéfini mis en œuvre par le module élémentaire 4X et le procédé décrit par la suite en relation avec la Fig. 6 est représenté sous forme d'instructions formant un programme d'ordinateur. Lorsqu'une ou plusieurs unités de traitement chargent un programme d'ordinateur correspondant à un module (respectivement à un traitement ou au procédé décrit en relation avec la Fig. 6) il met en œuvre ledit module (respectivement ledit traitement ou ledit procédé).

Dans un mode de réalisation, chaque unité de traitement de la pluralité est un processeur physique (ou logique mis en œuvre par un processeur physique), un microcontrôleur ou un DSP (« Digital Signal Processor » en terminologie anglo-saxonne) chargeant l'un des programmes d'ordinateur.

Toutefois, dans un mode de réalisation, tout ou partie des modules, le traitement du type de traitement prédéfini ou le procédé décrit en relation avec la Fig. 6 peuvent être implémentés sous forme matérielle par une machine ou un composant dédié, tel qu'un FPGA (« Field-Programmable Gate Array » en terminologie anglo-saxonne) ou un ASIC (« Application-Specific Integrated Circuit » en terminologie anglo-saxonne).

Dans un mode de réalisation, les modules du module élémentaire 4X, la base de données 35, et la mémoire cache 304 sont dispersés totalement ou partiellement sur des équipements différents, et reliés entre eux par un bus de communication lorsqu'ils sont sur un même équipement ou par un réseau de communication lorsqu'ils sont sur des équipements différents.

Par la suite, en relation avec la Fig. 6, nous décrivons comment un module élémentaire gère une réception d'une demande de premières données.

La **Fig. 6** illustre schématiquement un procédé exécuté par un module élémentaire lors d'une réception d'une ou plusieurs demandes de premières données.

Dans une étape 700, le module de communication 305 du module élémentaire 4X reçoit une demande de premières données. Comme nous l'avons vu plus haut, lorsque le module élémentaire 4X met en œuvre le module de traitement 41, la demande de premières données correspond à la requête transmise par le terminal 1 lors de l'étape 611. Toutefois, le module de communication 305 du module élémentaire 4X peut recevoir plusieurs demandes de premières données quasiment simultanément. Par exemple, lorsque le module élémentaire 4X met en œuvre le module de traitement 41, le module de communication 305 peut recevoir plusieurs demandes de premières données de plusieurs terminaux.

Dans une étape 701, le module de communication 305 du module élémentaire 4X vérifie pour chaque demande de premières données reçue, une présence desdites premières données dans la mémoire cache 304. Lorsque, pour une demande de premières données, les premières données sont absentes de la mémoire cache, dans un mode de réalisation, le module d'extraction 36 extrait lors d'une étape 702 l'information représentative des paramètres de configuration de ladite demande de premières données. Le module élémentaire 4X n'ayant pas les premières données à sa disposition, il doit les demander. Pour ce faire, le module de communication 305 transmet lors d'une étape 704 une demande de secondes données à la source 5 ou à une unité précédant le module élémentaire 4X dans la chaîne de traitement 4. Le module détermine lors d'une étape 703 à qui il doit transmettre la demande de secondes données à partir de l'information représentative de la chaîne de traitement. Dans le mode de réalisation décrit en relation avec les Figs. 2A, 3, 4, l'unité précédant le module élémentaire 4X dans la chaîne de traitement est soit la source 5 soit un module élémentaire. Si le module élémentaire 4X met en œuvre le module de traitement 41, le module élémentaire précédant le module élémentaire 4X dans la chaîne de traitement 4 est un module élémentaire mettant en œuvre le module de traitement 42. Comme nous l'avons vu plus haut, la demande de secondes données correspond à une version modifiée de la demande de premières données. Lors de la modification, le module de communication supprime l'identifiant du module élémentaire 4X de la demande de premières données. Ainsi, si le module élémentaire 4X met en œuvre le module de traitement 41, la demande de premières données comprend la séquence suivante :
http://Adresse1:port1/Adresse2:port2/Adresse3:port3/Adresse4:port4/IDportion?Conf et devient :
http://Adresse2:port2/Adresse3:port3/Adresse4:port4/IDportion?Conf une fois modifiée pour obtenir la demande de secondes données.

Dans une étape 705, le module d'allocation 303 détermine si une ou plusieurs unités de traitement de la pluralité doivent être allouées ou désallouées et alloue et/ou désalloue au moins une unité de traitement lorsque nécessaire en fonction de la ou des demandes reçues. La ou les unités de traitement allouées lors de l'étape 705 viennent s'ajouter à des unités de traitement de la pluralité déjà allouées par le module d'allocation 303. La ou les unités de traitement désallouées lors de l'étape 705 sont retranchées d'unités de traitement de la pluralité déjà allouée par le module d'allocation 303. Pour réaliser ses allocations et désallocations, le module d'allocation 303 applique une procédure d'allocation. La procédure d'allocation consiste par exemple à allouer un premier nombre prédéfini d'unités de traitement lorsqu'un écart entre un nombre d'unités de traitement allouées et un nombre d'unités de traitement actives est inférieur à un premier seuil. Chaque unité de traitement est associée à une liste de traitements du type de traitement prédéfini à effectuer, chaque traitement de la liste correspondant à une demande de premières données. Les unités de traitement allouées qui ont au moins un traitement dans leur liste sont considérées comme actives. Les unités de traitement allouées qui n'ont aucun traitement dans leur liste sont considérées comme inactives. La procédure d'allocation consiste par ailleurs par exemple à désallouer un deuxième nombre prédéfini d'unités de traitement lorsqu'un écart entre le nombre d'unités de traitement allouées et le nombre d'unités de traitement actives est supérieur à un deuxième seuil. Seules les unités de traitement inactives peuvent être désallouées. Dans un mode de réalisation, pour accroître une réactivité d'allocation, le premier nombre prédéfini est supérieur au deuxième nombre prédéfini.

Dans une étape 706, le module de gestion de charge 302 choisit pour chaque demande de premières données au moins une unité de traitement parmi les unités de traitement allouées pour exécuter le traitement du type de traitement correspondant à ladite demande. Pour ce faire, par exemple, le module de gestion de charge 302 choisit les unités de traitements allouées dont la liste de traitements associée contient le moins de traitements. Dans un autre mode de réalisation, le module de gestion de charge 302 parcourt l'ensemble des unités de traitement de manière circulaire et à chaque nouvelle demande de premières données avance d'une unité de traitement dans son parcours et choisit l'unité de traitement obtenue pour exécuter le traitement correspondant à ladite demande. Chaque unité de traitement choisie est activée par le module de gestion de charge 302 afin qu'elle applique le type de traitement prédéfini sur les secondes données à réception des secondes données. On note que, dans un mode de réalisation, préalablement à l'exécution d'un traitement correspondant à une demande de premières données, chaque unité de traitement interroge la base de données avec l'information représentative des paramètres de configuration extraite de ladite demande de premières données par le module d'extraction 36 pour obtenir les paramètres de configuration correspondant au traitement qu'il doit exécuter. Chaque unité de traitement choisie pour exécuter un traitement demandé par une demande de premières données doit donc attendre la réception des secondes données demandées lors de l'étape 704 pour pouvoir appliquer le traitement du type de traitement prédéfini sur lesdites deuxièmes données afin d'obtenir lesdites premières données.

L'étape 706 et l'étape 701 sont suivies d'une étape 707 au cours de laquelle, pour chaque demande de premières données, le module de communication 305 transmet les premières données lorsqu'elles sont disponibles à l'unité ayant émis la demande pour lesdites premières données. L'unité ayant émis la demande pour lesdites premières données est soit le terminal 1 (lorsque le module élémentaire 4X met en œuvre le module de traitement 41), soit un module élémentaire (lorsque le module élémentaire 4X met en œuvre le module de traitement 42 ou 43 ou 44).

Dans un mode de réalisation, le module d'extraction 36 extrait chaque information représentative de paramètres de configuration de chaque demande de premières données et stocke cette information dans la base de données 35. Chaque unité de traitement de la pluralité 31 devant exécuter un traitement interroge la base de données pour obtenir ladite information et retrouver ensuite les paramètres de configuration correspondant à cette information. Chaque information représentative de paramètres de configuration ainsi stockée peut être utilisée à des fins statistiques.

Dans un mode de réalisation, la procédure de lancement de la chaîne de traitement est exécutée par le CDN 2 ou le serveur 3. Dans ce cas, pour chaque segment, le terminal 1 transmet une requête par exemple conforme au protocole HLS pour obtenir ledit segment et le CDN 2 ou le serveur 3 traduit cette requête en une requête conforme à l'invention telle que par exemple décrite en relation avec l'étape 610.

Dans un mode de réalisation, la procédure de lancement de la chaîne de traitement est exécutée par le CDN 2 indépendamment de toute requête d'un terminal. Dans ce mode de réalisation, le CDN 2 anticipe des demandes à venir émanant de clients. Les segments ainsi obtenus sont conservés au moins temporairement par le CDN 2.

Dans un mode de réalisation, chaque unité de traitement de la pluralité disponible pour effectuer un traitement du type prédéfini correspondant à un module élémentaire 4X s'enregistre auprès d'une unité telle qu'un serveur, dit serveur d'enregistrement, avec lequel chaque module élémentaire peut communiquer en utilisant un réseau de communication. Dans ce cas, par exemple à intervalles réguliers, chaque module élémentaire interroge le serveur d'enregistrement afin d'obtenir la liste des unités de traitement qu'il pourrait utiliser. Dans ce mode de réalisation, dès qu'un module élémentaire alloue une unité de traitement de la liste conservée par le serveur d'enregistrement, il en informe le serveur d'enregistrement qui supprime cette unité de traitement de la liste.

Jusque-là, nous avons envisagé que chaque module de traitement de la chaîne de traitement 4 était mis en œuvre par un module élémentaire. Dans un mode de réalisation, seuls certains modules de traitement de la chaîne de traitement 4 sont mis en œuvre par un module élémentaire selon l'invention. Les autres modules de traitement sont mis en œuvre par des équipements classiques d'une chaîne de traitement. Lorsqu'un module élémentaire doit transmettre une demande de secondes données à un module de traitement mis en œuvre par un équipement classique, celui-ci traduit sa demande de secondes données dans un format conforme à un protocole compris par l'équipement classique et transmet la demande traduite audit équipement classique. Lorsqu'un module élémentaire reçoit une demande de premières données en provenance d'un module de traitement mis en œuvre par un équipement classique, celui-ci traduit cette demande de premières données dans un format conforme au format décrit par exemple en relation avec l'étape 610.

## Revendications

1. Module élémentaire (4X) destiné à être utilisé dans au moins une chaîne de traitement d'un système permettant de distribuer des contenus audiovisuels stockés ou produits en direct par des sources vers des terminaux d'affichage, chaque contenu étant reçu par un terminal sous forme d'une succession de fichiers consécutifs, appelés segments, chaque segment étant distribué à un terminal suite à une transmission d'une requête par ledit terminal et étant obtenu par une application d'une chaîne de traitement à une portion d'un contenu, le module élémentaire étant apte à exécuter un traitement d'un type prédéfini de la chaîne de traitement, **caractérisé en ce que** le module élémentaire comprend:
- une pluralité (31) variable d'unités de traitement disponibles pour exécuter le traitement du type prédéfini, le module élémentaire (4X) étant apte à obtenir régulièrement une information représentative de chaque unité de traitement ajoutée ou supprimée de la pluralité, chaque unité de traitement ne conservant aucune information concernant un traitement une fois le traitement effectué ;
- un module (30), dit module central, comprenant un module de communication (305) apte à recevoir des demandes de premières données, chaque demande comprenant une information représentative d'une chaîne de traitement à appliquer à une portion d'un contenu correspondant à un segment demandé dans une requête par un terminal pour obtenir lesdites premières données et une information représentative de paramètres de configuration à appliquer à au moins une unité de traitement dudit module élémentaire pour générer les premières données, chaque unité de traitement étant apte à prendre en compte l'information représentative des paramètres de configuration comprise dans une demande de première données pour effectuer un traitement correspondant à ladite demande de premières données; apte à transmettre une demande de secondes données à une source ou à une unité précédant le module élémentaire dans la chaîne de traitement déterminée à partir de l'information représentative de la chaîne de traitement, lesdites secondes données correspondant à ladite portion traitée ou pas par une ou plusieurs unités précédant le module élémentaire dans la chaîne de traitement ; et, apte à transmettre des premières données lorsqu'elles sont disponibles à une unité ayant émis une demande pour lesdites premières données ;
- un module d'allocation (303), apte à gérer des allocations et désallocations d'unités de traitement de la pluralité en fonction de demandes de premières données reçues ; et,
- un module de gestion de charge (302) apte à choisir pour chaque demande reçue au moins une unité de traitement parmi des unités de traitement allouées pour traiter des secondes données afin d'obtenir des premières données demandées et étant apte à lancer le traitement du type prédéfini par chaque unité de traitement choisie.

2. Module élémentaire selon la revendication 1, **caractérisé en ce que** chaque unité de traitement est apte à interroger une base de données (35) comprise dans le module central pour obtenir des paramètres de configuration correspondant à l'information représentative de paramètres de configuration avant d'effectuer un traitement correspondant à une demande de premières données.

3. Module élémentaire selon la revendication 1 ou 2, **caractérisé en ce que** le module central comprend une mémoire cache (304) et **en ce que** le module de communication est configuré pour transmettre une demande de secondes données lorsque les premières données demandées sont absentes de la mémoire cache.

4. Module élémentaire selon l'une quelconque des revendications 2 ou 3, **caractérisé en ce que** la base de données est apte à comprendre des paramètres de configuration fixés indépendamment d'une demande de premières données.

5. Module élémentaire selon l'une quelconque des revendications 2, 3 ou 4 **caractérisé en ce que** la base de données et chaque module du module élémentaire sont colocalisés sur un même équipement ou totalement ou partiellement dispersés sur des équipements séparés reliés par un réseau de communication.

6. Module élémentaire selon l'une quelconque des revendications précédentes, **caractérisé en ce qu'**il comprend un module d'extraction (36) apte à extraire l'information représentative des paramètres de configuration de chaque demande de premières données reçues.

7. Module élémentaire selon l'une quelconque des revendications précédentes, **caractérisé en ce qu'**il comprend des moyens d'exécution d'un procédé de gestion de la mémoire cache gérant des entrées et sorties de données de la mémoire cache.

8. Module élémentaire selon la revendication 7, **caractérisé en ce qu'**il comprend un module de régulation (301) apte à fournir des règles de gestion au module de gestion de cache, au module d'allocation et au module de gestion de charge, le module de régulation étant apte à stocker des règles de gestion prédéfinies ou recevoir des règles de gestion d'une entité extérieure.

9. Procédé de traitement exécuté par un module élémentaire exécutant un type de traitement prédéfini dans au moins une chaîne de traitement d'un système de distribution de contenus audiovisuels stockés ou produits en direct par des sources vers des terminaux d'affichage, chaque distribution de contenus se faisant sous forme de fichiers, appelés segments, chaque segment distribué à un terminal ayant fait l'objet d'une requête transmise par ledit terminal et résultant d'une application d'une chaîne de traitement à une portion de contenu demandée par la requête, **caractérisé en ce que** procédé comprend :
- recevoir (700) au moins une demande de premières données, chaque demande comprenant une information représentative d'une chaîne de traitement à appliquer à une portion d'un contenu correspondant à un segment demandé dans une requête par un terminal pour obtenir lesdites premières données et une information représentative de paramètres de configuration à appliquer à au moins une unité de traitement pour générer les premières données ;
- extraire (702) l'information représentative des paramètres de configuration contenus dans ladite demande et (703, 704) transmettre une demande de secondes données à une source ou à une unité précédant le module élémentaire dans la chaîne de traitement déterminée à partir de l'information représentative de la chaîne de traitement, lesdites secondes données correspondant à ladite portion traitée ou pas par une ou plusieurs unités précédant le module élémentaire dans la chaîne de traitement ;
- déterminer (705) si une ou plusieurs unités de traitement du module élémentaire doivent être allouées ou désallouées et allouer et/ou désallouer au moins une unité de traitement lorsque nécessaire en fonction de la ou des demandes reçues, chaque unité de traitement appartenant à une pluralité d'unités de traitement disponibles pour exécuter le traitement du type de traitement prédéfini, le module élémentaire obtenant régulièrement une information représentative de chaque unité de traitement ajoutée ou supprimée de ladite pluralité ;
- choisir (706) pour chaque demande au moins une unité de traitement parmi les unités de traitement allouées et activer chaque unité de traitement choisie afin qu'elle applique le type de traitement prédéfini sur les secondes données à réception des secondes données, chaque unité de traitement prenant en compte l'information représentative des paramètres de configuration correspondant au traitement qu'elle doit exécuter ; et,
- pour chaque demande, transmettre (707) les premières données lorsqu'elles sont disponibles à une unité ayant émis la demande pour lesdites premières données ; chaque unité de traitement ne conservant aucune information concernant un traitement une fois le traitement effectué.

10. Procédé selon la revendication 9 **caractérisé en ce que**, chaque unité de traitement devant exécuter un traitement demandé dans une demande de premières données interroge une base de données en utilisant l'information représentative de paramètres de configuration contenus dans ladite demande afin d'obtenir des paramètres de configuration correspondant à ladite information à appliquer pour ledit traitement.

11. Procédé selon la revendication 9 ou 10, **caractérisé en ce que** le procédé comprend, pour chaque demande, préalablement à la transmission d'une demande pour des deuxièmes données, vérifier une présence des premières données dans une mémoire cache du module élémentaire ; et, transmettre la deuxième demande lorsque les premières données sont absentes de la mémoire cache.

12. Système de distribution de contenus audiovisuels stockés ou produits en direct par des sources vers des terminaux d'affichage, chaque contenu étant reçu par un terminal sous forme d'une succession de fichiers consécutifs, appelés segments, chaque segment étant distribué à un terminal suite à une transmission d'une requête par ledit terminal et étant obtenu par une application d'une chaîne de traitement à une portion d'un contenu, **caractérisé en ce que** au moins une chaîne de traitement mise en œuvre par le système de distribution comprend au moins un module élémentaire selon les revendications 1 à 8 apte à mettre en œuvre un traitement d'un type de traitement prédéfini.

13. Produit programme d'ordinateur, **caractérisé en ce qu'**il comporte des instructions pour mettre en œuvre, par un équipement, le procédé selon la revendication 9, 10 ou 11 par un processeur dudit équipement.

14. Moyens de stockage, **caractérisés en ce qu'**ils sont aptes à stocker un programme d'ordinateur comportant des instructions pour mettre en œuvre, par un équipement, le procédé selon la revendication 9, 10 ou 11 lorsque ledit programme est exécuté par un processeur dudit équipement.

## Patentansprüche

1. Elementarmodul (4X), das dazu bestimmt ist, in mindestens einem Verarbeitungsablauf eines Systems verwendet zu werden, das es ermöglicht, gespeicherte oder direkt von Quellen erzeugte audiovisuelle Inhalte an Anzeigeendgeräte zu verteilen, wobei jeder Inhalt in Form einer Folge von aufeinanderfolgenden Dateien, Segmente genannt, von einem Endgerät empfangen wird, wobei jedes Segment nach einer Übertragung eines Antrags durch ein Endgerät an das Endgerät verteilt und durch eine Anwendung eines Verarbeitungsablaufs an einen Abschnitt eines Inhalts erhalten wird, wobei das Elementarmodul fähig ist, eine Verarbeitung eines vordefinierten Typs des Verarbeitungsablaufs auszuführen, **dadurch gekennzeichnet, dass** das Elementarmodul enthält:
- eine variable Vielzahl (31) von verfügbaren Verarbeitungseinheiten, um die Verarbeitung des vordefinierten Typs auszuführen, wobei das Elementarmodul (4X) fähig ist, regelmäßig eine für jede der Vielzahl hinzugefügte oder aus ihr gelöschte Verarbeitungseinheit repräsentative Information zu erhalten, wobei jede Verarbeitungseinheit keine eine Verarbeitung betreffende Information aufrechterhält, wenn die Verarbeitung ausgeführt wurde;
- ein Modul (30), zentrales Modul genannt, das ein Kommunikationsmodul (305) enthält, das fähig ist, Anforderungen erster Daten zu empfangen, wobei jede Anforderung eine Information, die für einen Verarbeitungsablauf repräsentativ ist, der an einen Abschnitt eines Inhalts anzuwenden ist, der einem in einem Antrag von einem Endgerät angeforderten Segment entspricht, um die ersten Daten zu erhalten, und eine Information enthält, die für Konfigurationsparameter repräsentativ ist, die an mindestens eine Verarbeitungseinheit des Elementarmoduls anzuwenden sind, um die ersten Daten zu generieren, wobei jede Verarbeitungseinheit fähig ist, die in einer Anforderung erster Daten enthaltene, für die Konfigurationsparameter repräsentative Information zu berücksichtigen, um eine Verarbeitung entsprechend der Anforderung erster Daten auszuführen; fähig ist, eine Anforderung zweiter Daten an eine Quelle oder an eine dem Elementarmodul im Verarbeitungsablauf vorhergehende Einheit zu übertragen, die ausgehend von der für den Verarbeitungsablauf repräsentativen Information bestimmt wird, wobei die zweiten Daten dem von einer oder mehreren im Verarbeitungsablauf dem Elementarmodul vorhergehenden Einheiten verarbeiteten oder nicht verarbeiteten Abschnitt entsprechen; und fähig ist, erste Daten, wenn sie verfügbar sind, an eine Einheit zu übertragen, die eine Anforderung für die ersten Daten gesendet hat;
- ein Zuweisungsmodul (303), das fähig ist, Zuweisungen und Freigaben von Verarbeitungseinheiten der Vielzahl abhängig von empfangenen Anforderungen erster Daten zu verwalten; und
- ein Lastverwaltungsmodul (302), das fähig ist, für jede empfangene Anforderung mindestens eine Verarbeitungseinheit unter zugewiesenen Verarbeitungseinheiten zu wählen, um zweite Daten zu verarbeiten, um erste angeforderte Daten zu erhalten, und fähig ist, die Verarbeitung des vordefinierten Typs durch jede gewählte Verarbeitungseinheit zu starten.

2. Elementarmodul nach Anspruch 1, **dadurch gekennzeichnet, dass** jede Verarbeitungseinheit fähig ist, eine im zentralen Modul enthaltene Datenbank (35) zu befragen, um Konfigurationsparameter zu erhalten, die der für Konfigurationsparameter repräsentativen Information entsprechen, ehe eine einer Anforderung erster Daten entsprechende Verarbeitung ausgeführt wird.

3. Elementarmodul nach Anspruch 1 oder 2, **dadurch gekennzeichnet, dass** das zentrale Modul einen Cache-Speicher (304) enthält, und dass das Kommunikationsmodul konfiguriert ist, eine Anforderung zweiter Daten zu übertragen, wenn die angeforderten ersten Daten im Cache-Speicher fehlen.

4. Elementarmodul nach einem der Ansprüche 2 oder 3, **dadurch gekennzeichnet, dass** die Datenbank fähig ist, Konfigurationsparameter zu enthalten, die unabhängig von einer Anforderung erster Daten festgelegt sind.

5. Elementarmodul nach einem der Ansprüche 2, 3 oder 4, **dadurch gekennzeichnet, dass** die Datenbank und jedes Modul des Elementarmoduls auf einer gleichen Ausrüstung zusammen lokalisiert oder vollständig oder teilweise auf getrennte Ausrüstungen verstreut sind, die durch ein Kommunikationsnetz verbunden sind.

6. Elementarmodul nach einem der vorhergehenden Ansprüche, **dadurch gekennzeichnet, dass** es ein Entnahmemodul (36) enthält, das fähig ist, die für die Konfigurationsparameter repräsentative Information aus jeder Anforderung empfangener erster Daten zu entnehmen.

7. Elementarmodul nach einem der vorhergehenden Ansprüche, **dadurch gekennzeichnet, dass** es Einrichtungen zur Ausführung eines Verwaltungsverfahrens des Cache-Speichers enthält, das Dateneingänge und -ausgänge des Cache-Speichers verwaltet.

8. Elementarmodul nach Anspruch 7, **dadurch gekennzeichnet, dass** es ein Regelungsmodul (301) enthält, das fähig ist, Verwaltungsregeln an das Cache-Verwaltungsmodul, an das Zuweisungsmodul und an das Lastverwaltungsmodul zu liefern, wobei das Regelungsmodul fähig ist, vordefinierte Verwaltungsregeln zu speichern oder Verwaltungsregeln von einer externen Entität zu empfangen.

9. Verarbeitungsverfahren, das von einem Elementarmodul ausgeführt wird, das einen vordefinierten Verarbeitungstyp in mindestens einem Verarbeitungsablauf eines Verteilungssystems von gespeicherten oder direkt von Quellen generierten audiovisuellen Inhalten an Anzeigeendgeräte ausführt, wobei jede Verteilung von Inhalten in Form von Dateien, Segmente genannt, erfolgt, wobei jedes an ein Endgerät verteilte Segment Gegenstand eines vom Endgerät übertragenen Antrags war und aus einer Anwendung eines Verarbeitungsablaufs an einen vom Antrag angeforderten Inhaltsabschnitt resultiert, **dadurch gekennzeichnet, dass** das Verfahren enthält:
- Empfangen (700) mindestens einer Anforderung erster Daten, wobei jede Anforderung eine Information, die für einen Verarbeitungsablauf repräsentativ ist, der an einen Abschnitt eines Inhalts entsprechend einem in einem Antrag durch ein Endgerät angeforderten Segment anzuwenden ist, um die ersten Daten zu erhalten, und eine Information enthält, die für Konfigurationsparameter repräsentativ ist, die an mindestens eine Verarbeitungseinheit anzuwenden sind, um die ersten Daten zu generieren;
- Entnahme (702) der für die in der Anforderung enthaltenen Konfigurationsparameter repräsentativen Information und (703, 704) Übertragen einer Anforderung zweiter Daten an eine Quelle oder an eine dem Elementarmodul in dem Verarbeitungsablauf vorhergehende Einheit, die ausgehend von der für den Verarbeitungsablauf repräsentativen Information bestimmt wird, wobei die zweiten Daten dem Abschnitt entsprechen, der von einer oder mehreren dem Elementarmodul im Verarbeitungsablauf vorhergehenden Einheiten verarbeitet wurde oder nicht;
- Bestimmen (705), ob eine oder mehrere Verarbeitungseinheiten des Elementarmoduls zugewiesen oder freigegeben werden müssen, und Zuweisung und/oder Freigabe mindestens einer Verarbeitungseinheit falls nötig, abhängig von der oder den empfangenen Anforderungen, wobei jede Verarbeitungseinheit zu einer Vielzahl von verfügbaren Verarbeitungseinheiten gehört, um die Verarbeitung des vordefinierten Verarbeitungstyps auszuführen, wobei das Elementarmodul regelmäßig eine Information erhält, die für jede hinzugefügte oder gelöschte Verarbeitungseinheit der Vielzahl repräsentativ ist;
- Wählen (706) für jede Anforderung mindestens einer Verarbeitungseinheit unter den zugewiesenen Verarbeitungseinheiten und Aktivieren jeder gewählten Verarbeitungseinheit, damit sie den vordefinierten Verarbeitungstyp an die zweiten Daten bei Empfang der zweiten Daten anwendet, wobei jede Verarbeitungseinheit die Information berücksichtigt, die für die Konfigurationsparameter repräsentativ ist, die der Verarbeitung entsprechen, die sie ausführen muss; und
- für jede Anforderung, Übertragen (707) der ersten Daten, wenn sie verfügbar sind, an eine Einheit, die die Anforderung für die ersten Daten gesendet hat; wobei jede Verarbeitungseinheit keine Information betreffend eine Verarbeitung aufrechterhält, sobald die Verarbeitung ausgeführt wurde.

10. Verfahren nach Anspruch 9, **dadurch gekennzeichnet, dass** jede Verarbeitungseinheit, die eine in einer Anforderung erster Daten angeforderte Verarbeitung ausführen muss, eine Datenbank befragt, indem sie die für in der Anforderung enthaltenen Konfigurationsparameter repräsentative Information verwendet, um Konfigurationsparameter zu erhalten, die der für die Verarbeitung anzuwendenden Information entsprechen.

11. Verfahren nach Anspruch 9 oder 10, **dadurch gekennzeichnet, dass** das Verfahren für jede Anforderung vor der Übertragung einer Anforderung für zweite Daten die Überprüfung eines Vorhandenseins der ersten Daten in einem Cache-Speicher des Elementarmoduls und die Übertragung der zweiten Anforderung enthält, wenn die ersten Daten im Cache-Speicher fehlen.

12. System zur Verteilung audiovisueller Inhalte, die gespeichert sind oder direkt von Quellen erzeugt werden, an Anzeigeendgeräte, wobei jeder Inhalt von einem Endgerät in Form einer Folge aufeinanderfolgender Dateien, Segmente genannt, empfangen wird, wobei jedes Segment an ein Endgerät nach einer Übertragung eines Antrags durch das Endgerät verteilt und durch eine Anwendung eines Verarbeitungsablaufs an einen Abschnitt eines Inhalts erhalten wird, **dadurch gekennzeichnet, dass** mindestens ein vom Verteilungssystem verwendeter Verarbeitungsablauf mindestens ein Elementarmodul gemäß den Ansprüchen 1 bis 8 enthält, das fähig ist, eine Verarbeitung eines vordefinierten Verarbeitungstyps durchzuführen.

13. Computerprogrammprodukt, **dadurch gekennzeichnet, dass** es Anweisungen aufweist, um durch eine Ausrüstung das Verfahren nach Anspruch 9, 10 oder 11 durch einen Prozessor der Ausrüstung auszuführen.

14. Speichereinrichtungen, **dadurch gekennzeichnet, dass** sie fähig sind, ein Computerprogramm zu speichern, das Anweisungen aufweist, um durch eine Ausrüstung das Verfahren nach Anspruch 9, 10 oder 11 durchzuführen, wenn das Programm von einem Prozessor der Ausrüstung ausgeführt wird.

## Claims

1. Elementary module (4X) intended to be used in at least one processing pipeline of a system allowing stored audiovisual contents or audiovisual contents produced live by sources to be distributed to display terminals, each content being received by a terminal in the form of a succession of consecutive files, called chunks, each chunk being distributed to a terminal following a transmission of a request by said terminal and being obtained by applying a processing pipeline to a segment of a content, the elementary module being able to execute a processing operation of a predefined type of the processing pipeline, **characterized in that** the elementary module comprises:
- a variable plurality (31) of processing units available to execute the processing operation of the predefined type, the elementary module (4X) being able to regularly obtain information representative of each processing unit added or removed from the plurality, each processing unit preserving no information regarding a processing operation once the processing operation has been performed;
- a module (30), called the central module, comprising a communication module (305) able to receive demands for first data, each demand comprising information representative of a processing pipeline to be applied to a segment of a content corresponding to a chunk demanded in a request by a terminal to obtain said first data and information representative of configuration parameters to be applied to at least one processing unit of said elementary module to generate the first data, each processing unit being able to take into account the information representative of the configuration parameters that is comprised in a demand for first data so as to perform a processing operation corresponding to said demand for first data; able to transmit a demand for second data to a source or to a unit preceding the elementary module in the processing pipeline determined on the basis of the information representative of the processing pipeline, said second data corresponding to said segment processed or not by one or more units preceding the elementary module in the processing pipeline; and able to transmit first data when they are available to a unit having sent a demand for said first data;
- an allocating module (303) able to manage allocations and deallocations of processing units of the plurality depending on received demands for first data; and
- a load-managing module (302) able to select, for each received demand, at least one processing unit among the processing units allocated to process the second data in order to obtain the demanded first data and being able to launch the processing operation of the predefined type using each selected processing unit.

2. Elementary module according to Claim 1, **characterized in that** each processing unit is able to interrogate a database (35) comprised in the central module with a view to obtaining configuration parameters corresponding to the information representative of configuration parameters before performing a processing operation corresponding to a demand for first data.

3. Elementary module according to Claim 1 or 2, **characterized in that** the central module comprises a cache memory (304) and **in that** the communication module is configured to transmit a demand for second data when the demanded first data are absent from the cache memory.

4. Elementary module according to either one of Claims 2 and 3, **characterized in that** the database is able to comprise configuration parameters set independently of a demand for first data.

5. Elementary module according to any one of Claims 2, 3 and 4, **characterized in that** the database and each module of the elementary module are located together in the same piece of equipment or completely or partially dispersed between separate pieces of equipment that are connected by a communication network.

6. Elementary module according to any one of the preceding claims, **characterized in that** it comprises an extracting module (36) able to extract the information representative of the configuration parameters from each demand for first data received.

7. Elementary module according to any one of the preceding claims, **characterized in that** it comprises means for executing a method for managing the cache memory that manages inputs of data into the cache memory and outputs of data therefrom.

8. Elementary module according to Claim 7, **characterized in that** it comprises a regulating module (301) able to deliver management rules to the cache-managing module, to the allocating module and to the load-managing module, the regulating module being able to store predefined management rules or receive management rules from an exterior entity.

9. Processing method executed by an elementary module that executes a predefined type of processing operation in at least one processing pipeline of a system for distributing stored audiovisual contents or audiovisual contents produced live by sources to display terminals, each content being distributed in the form of files, called chunks, each chunk being distributed to a terminal having been the subject of a request transmitted by said terminal and resulting in an application of the processing pipeline to a content segment demanded by the request, **characterized in that** the method comprises:
- receiving (700) at least one demand for first data, each demand comprising information representative of a processing pipeline to be applied to a segment of a content corresponding to a chunk demanded in a request by a terminal to obtain said first data and information representative of configuration parameters to be applied to at least one processing unit to generate the first data;
- extracting (702) the information representative of the configuration parameters contained in said demand and transmitting (703, 704) a demand for second data to a source or to a unit preceding the elementary module in the processing pipeline determined on the basis of the information representative of the processing pipeline, said second data corresponding to said segment processed or not by one or more units preceding the elementary module in the processing pipeline;
- determining (705) whether one or more processing units of the elementary module must be allocated or deallocated and allocating and/or deallocating at least one processing unit when required depending on the one or more received demands, each processing unit belonging to a plurality of processing units available to execute the processing operation of the predefined type, the elementary module regularly obtaining information representative of each processing unit added or removed from said plurality;
- selecting (706), for each demand, at least one processing unit among the allocated processing units and activating each selected processing unit so that it applies the predefined type of processing operation to the second data on reception of the second data, each processing unit taking into account the information representative of the configuration parameters corresponding to the processing operation that it must execute; and
- for each demand, transmitting (707) the first data when they are available to a unit having sent the demand for said first data; each processing unit preserving no information regarding a processing operation once the processing operation has been performed.

10. Method according to Claim 9, **characterized in that** each processing unit that is required to execute a processing operation demanded in a demand for first data interrogates a database using the information representative of configuration parameters contained in said demand in order to obtain configuration parameters corresponding to said information to be applied in said processing operation.

11. Method according to Claim 9 or 10, **characterized in that** the method comprises, for each demand, prior to the transmission of a demand for second data, verifying a presence of the first data in a cache memory of the elementary module; and transmitting the second demand when the first data are absent from the cache memory.

12. System for distributing stored audiovisual contents or audiovisual contents produced live by sources to display terminals, each content being received by a terminal in the form of a succession of consecutive files, called chunks, each chunk being distributed to a terminal following a transmission of a request by said terminal and being obtained by applying a processing pipeline to a segment of a content, **characterized in that** at least one processing pipeline implemented by the distributing system comprises at least one elementary module according to Claims 1 to 8 able to implement a processing operation of a predefined type of processing operation.

13. Computer program product, **characterized in that** it comprises instructions for implementing, by means of a piece of equipment, the method according to Claim 9, 10 or 11, using a processor of said piece of equipment.

14. Storage means, **characterized in that** they are able to store a computer program comprising instructions for implementing, by means of a piece of equipment, the method according to Claim 9, 10 or 11, when said program is executed by a processor of said piece of equipment.
